# EUROPÄISCHE PATENTSCHRIFT

(11) **EP 3 614 797 B1**
(45) Veröffentlichungstag und Bekanntmachung des Hinweises auf die Patenterteilung: **20.04.2022**
(21) Anmeldenummer: 19188759.5
(22) Anmeldetag: 29.07.2019
(51) Int. Cl.: H05B 3/26, H05B 1/02, H05B 3/42

(54) **HEIZEINRICHTUNG UND VERFAHREN ZUM BETRIEB EINER HEIZEINRICHTUNG**
HEATING DEVICE AND METHOD FOR OPERATING A HEATING DEVICE
DISPOSITIF DE CHAUFFAGE ET PROCÉDÉ DE FONCTIONNEMENT D'UN DISPOSITIF DE CHAUFFAGE

(30) Priorität: 17.08.2018 DE 102018213869
(43) Veröffentlichungstag der Anmeldung: 26.02.2020
(73) Patentinhaber: E.G.O. Elektro-Gerätebau GmbH, 75038 Oberderdingen (DE)
(72) Erfinder: Erbe, Sebastian, 75438 Knittlingen (DE); Pawlowitsch, Ralf, 76187 Karlsruhe (DE); Schönemann, Konrad, 75056 Sulzfeld (DE); Stötzner, Elisabeth, 75015 Bretten (DE)
(74) Vertreter: Patentanwälte Ruff, Wilhelm, Beier, Dauster & Partner mbB

(56) Entgegenhaltungen:
- EP-A1- 3 145 273
- EP-A1- 3 197 241
- EP-A1- 3 278 691
- WO-A1-2010/008279

## Beschreibung

### Anwendungsgebiet und Stand der Technik

Die Erfindung betrifft eine Heizeinrichtung für Fluide, insbesondere für Flüssigkeiten wie Wasser, sowie ein Verfahren zum Betrieb einer solchen Heizeinrichtung, insbesondere bezüglich einer Temperaturerfassung oder Erfassung von temperaturabhängigen Vorgängen.

Aus der DE 102013200277 A1, der EP 3096585 A1 und der EP 3145273 A1 sind grundsätzlich gattungsgemäße Heizeinrichtungen bekannt. Sie weisen ein Heizelement mit mindestens einem Heizleiter auf, wobei das Heizelement von einer dielektrischen flächigen Isolationsschicht überdeckt wird. Diese Isolationsschicht weist einen temperaturabhängigen elektrischen Widerstand auf, so dass ein sogenannter Leckstrom oder Ableitstrom bzw. Fehlerstrom durch sie hindurch erfasst werden kann und als Maß für eine Temperatur an der Heizeinrichtung verwendet werden kann. So können sowohl kurzzeitige Vorgänge wie ein lokales Überhitzen, beispielsweise aufgrund von Verkalkung an einer Stelle, sowie ein größerflächiges kurzfristiges Überhitzen aufgrund von zu geringem Wasserstand festgestellt werden. Darauf kann dann situationsbedingt reagiert werden.

Aus der WO 2010/008279 A1 ist eine Heizeinrichtung bekannt, die insbesondere als elektrischer Wasserkocher ausgebildet ist, die eine Temperaturregelung aufweist. Für diese Temperaturregelung wird ein temperaturabhängiger elektrischer Widerstand eines Heizelements der Heizeinrichtung verwendet.

Aus der EP 3 197 241 A1 ist eine weitere Heizeinrichtung bekannt, bei der eine Temperaturerfassung möglich ist, um eine Temperatur an der Heizeinrichtung regeln zu können. Dazu werden temperaturabhängige kapazitive Eigenschaften einer Dielektrikumsschicht genutzt, auf der zwei Elektroden mit Abstand zueinander verlaufen. Aus einer Änderung einer Kapazität an den Elektroden kann eine Temperaturänderung an der Heizeinrichtung bestimmt werden.

Aus der EP 3 278 691 A1 ist eine weitere Heizeinrichtung bekannt, die für eine Verdampfereinrichtung in einem Dampfgarer verwendet wird. Eine Fluidkammer ist als kurzes aufrecht stehendes Rohr ausgebildet, und an einer Außenseite sind im unteren Bereich ein erstes Heizelement und im oberen Bereich ein zweites Heizelement angeordnet. Für eine Temperaturregelung sind Temperatursensoren in unterschiedlicher Ausgestaltung vorgesehen.

### Aufgabe und Lösung

Der Erfindung liegt die Aufgabe zugrunde, eine eingangs genannte Heizeinrichtung sowie ein Verfahren zu ihrem Betrieb zu schaffen, mit denen Probleme des Standes der Technik gelöst werden können und es insbesondere möglich ist, die Heizeinrichtung noch genauerer und noch sicherer betreiben zu können.

Gelöst wird diese Aufgabe durch eine Heizeinrichtung mit den Merkmalen des Anspruchs 1 sowie durch ein Verfahren mit den Merkmalen des Anspruchs 10. Vorteilhafte sowie bevorzugte Ausgestaltungen der Erfindung sind Gegenstand der weiteren Ansprüche und werden im Folgenden näher erläutert. Dabei werden manche der Merkmale nur für die Heizeinrichtung oder nur für das Verfahren zu ihrem Betrieb beschrieben. Sie sollen jedoch unabhängig davon sowohl für die Heizeinrichtung als auch für das Verfahren zu ihrem Betrieb selbständig und unabhängig voneinander gelten können. Der Wortlaut der Ansprüche wird durch ausdrückliche Bezugnahme zum Inhalt der Beschreibung gemacht.

Es ist vorgesehen, dass die Heizeinrichtung eine Fluidkammer aufweist. Diese kann unterschiedlich ausgebildet sein und als eine Art Fluidvorrat ausgebildet sein, alternativ im Wesentlichen für einen Durchlauf von Fluid, das erhitzt werden soll, beispielsweise als ein Kanal oder ein Rohr. An einer Außenseite der Fluidkammer, vorteilhaft vom Fluid abgewandt, ist mindestens ein Heizelement mit mindestens einem Heizleiter aufgebracht. Das Heizelement kann vielfältig ausgebildet sein und beispielsweise auch mehrere parallel und/oder seriell geschaltete Heizleiter aufweisen, wie dies an sich bekannt ist. Das Heizelement dient dazu, Fluid in der Fluidkammer zu erhitzen, beispielsweise Wasser, um es zu verdampfen.

Die Heizeinrichtung weist mindestens eine flächige dielektrische Isolationsschicht auf. Sie überdeckt im Wesentlichen das mindestens eine Heizelement bzw. überdeckt eine entsprechend große Fläche. Die Isolationsschicht kann direkt auf dem Heizelement aufgebracht sein, es können aber auch weitere Schichten dazwischenliegen. Des Weiteren weist die dielektrische Isolationsschicht einen temperaturabhängigen elektrischen Widerstand auf. Auf beiden Seiten der Isolationsschicht ist jeweils mindestens ein elektrisch leitfähiger Anschluss vorgesehen. Dies kann beispielsweise das Heizelement oder einer seiner Heizleiter sein, möglicherweise auch eine metallische Außenseite der Fluidkammer selbst, die vorteilhaft auch ein Träger für das Heizelement ist. Mindestens einer der elektrisch leitfähigen Anschlüsse kann flächig sein, vorteilhaft mit etwa derselben Fläche wie die Isolationsschicht. Insbesondere sind die beiden elektrisch leitfähigen Anschlüsse auf beiden Seiten der Isolationsschicht großflächig bzw. überdecken bzw. überlappen die Isolationsschicht.

Mindestens einer der elektrisch leitfähigen Anschlüsse ist an eine Steuerung bzw. an eine Messeinrichtung angeschlossen, um einen Leckstrom bzw. Ableitstrom als temperaturabhängigen Stromfluss durch die dielektrische Isolationsschicht hindurch zu erfassen. Auch dies ist für sich genommen aus dem vorgenannten Stand der Technik bekannt. Diese Steuerung weist Controller bzw. einen Mikrocontroller auf, der mindestens einen AD-Eingang aufweist. Des Weiteren sind Messmittel vorgesehen, um eine Versorgungsspannung der Heizeinrichtung zu messen. Diese Versorgungsspannung ist diejenige Spannung, an die die Heizeinrichtung angeschlossen ist bzw. mit der das mindestens eine Heizelement betrieben wird. Dies ist in der Regel die sogenannte Netzspannung, was jedoch nicht zwingend so sein muss. Die Messmittel können mindestens einen Widerstand oder ein Widerstands-Netzwerk als Spannungsteiler aufweisen, was nachfolgend noch näher erläutert wird. Des Weiteren sind die Messmittel mit dem AD-Eingang des Controllers verbunden, so dass der Controller die Information über die genaue Höhe der Versorgungsspannung erhält.

Somit ist es möglich, dass in der Steuerung bzw. in dem Controller nicht nur der temperaturabhängige Leckstrom erfasst wird, aus dem eben eine Temperatur an der Heizeinrichtung bzw. an der Fluidkammer ermittelt werden kann. Dies an sich ist aus dem eingangs genannten Stand der Technik ja bekannt. Es hat sich im Rahmen der Erfindung aber herausgestellt, dass hierbei Schwankungen der Versorgungsspannung stark störende Auswirkungen auf die Heizeinrichtung haben können, da die über der Isolationsschicht abfallende Leckspannung entsprechend dem Leckstrom direkt davon abhängt. Somit hängt auch der Leckstrom direkt von der Versorgungsspannung ab bzw. schwankt mit dieser. In der Steuerung kann es nun zu Problemen kommen, wenn Schwankungen des Leckstroms erfasst werden, da nicht erkannt werden kann, ob diese von Schwankungen in der Versorgungsspannung oder von einer Temperaturänderung kommen. Hierbei hat es sich beispielsweise als bereits sehr störend erwiesen, wenn in einem elektrischen Gerät, in dem die Heizeinrichtung eingebaut ist, andere starke elektrische Verbraucher ein- oder ausgeschaltet werden. Ist die Heizeinrichtung beispielsweise als Verdampfer in einem Dampfbackofen eingesetzt, der noch weitere elektrische Heizungen mit hoher Leistung aufweist, so kann ein im Betrieb vorgesehenes häufiges Ein- und Ausschalten dieser Heizeinrichtungen, beispielsweise als bestimmungsgemäßes Takten zum Halten einer Temperatur, zu Schwankungen in der Versorgungsspannung und somit zu Schwankungen des Leckstroms führen. Dies kann mit der Erfindung vermieden werden, wenn die Versorgungsspannung eben auch gemessen wird, da damit dann dieser Effekt sozusagen herausgerechnet werden kann.

Es kann vorgesehen sein, dass die Messmittel einen Spannungsteiler mit mindestens zwei Widerständen aufweisen. Dieser Spannungsteiler kann mit einerseits der Versorgungsspannung verbunden sein, um diese zu verringern, so dass sie direkt mit dem AD-Eingang verbunden werden kann. Dies stellt eine sehr einfache Möglichkeit dar, wie der Controller die Information über die Versorgungsspannung erhalten kann.

Vorteilhaft sind zwei AD-Eingänge vorgesehen, und zwar einer für die Versorgungsspannung und ein anderer für den Leckstrom bzw. Ableitstrom oder die entsprechende Spannung. Beide Werte können dann an AD-Eingängen des Controllers erfasst werden.

Möglicherweise kann der Spannungsteiler auch als Spannungsteiler-Netzwerk ausgebildet sein und beispielsweise drei Widerstände aufweisen oder sogar noch mehr. Dabei können zwei Widerstände in Serie und ein Widerstand parallel dazu geschaltet sein. Hierfür können allgemein bekannte Möglichkeiten angewandt werden, die der Fachmann kennt.

In einer ersten vorteilhaften Ausgestaltung der Erfindung ist die Fluidkammer als ein Rohr ausgebildet, das aufrecht stehend oder liegend angeordnet sein kann. Möglicherweise kann es auch schräg verlaufen. Vorteilhaft ist mindestens ein Heizelement an einer Mantelwand des Rohrs angeordnet, möglicherweise auch ein Heizelement an seiner Unterseite.

In einer anderen Ausgestaltung der Erfindung ist die Fluidkammer von beliebiger Form, beispielsweise auch als flache Schale, und weist nur an ihrer Unterseite ein Heizelement auf. Dann soll bezüglich einer Temperaturüberwachung vor allem erkannt und vermieden werden, dass kein zu verdampfendes Wasser mehr vorhanden ist, wodurch eine zu starke und zu schnelle Temperaturerhöhung mit möglicher Beschädigung der Heizeinrichtung eintreten könnte.

In weiterer Ausgestaltung der Erfindung gemäß der ersten Alternative kann an der Außenseite der Fluidkammer, die ein aufrecht stehendes Rohr aufweist, mindestens ein Heizelement aufgebracht sein, vorteilhaft können zwei Heizelemente mit jeweils mehreren Heizleitern aufgebracht sein. Diese beiden Heizelemente können dann separat angesteuert werden. Sie sind vorteilhaft in getrennten Höhenabschnitten der Fluidkammer bzw. des Rohrs angeordnet, so dass eine von der Höhe abhängige unterschiedliche Beheizung möglich ist. Dabei kann ein zweites Heizelement über einem ersten Heizelement angeordnet sein. Hierbei kann eine genannte Temperaturerfassung nicht nur dazu dienen, lokale Überhitzungen an einem der Heizelemente festzustellen, wie sie durch Verkalkung entstehen können. Es kann auch festgestellt werden, ob zuerst an dem oberen zweiten Heizelement eine zu hohe Temperatur auftritt, bevor sie an dem unteren ersten Heizelement auftritt. Dies kann dann als Signal dafür gewertet werden, dass Fluid bzw. Wasser nachgefüllt werden muss zum Verdampfen. Durch eine langfristige Temperaturerhöhung über mehrere Minuten oder sogar mehrere Stunden des Betriebs hinweg kann eine großflächige Verkalkung erkannt werden, da dann die von dem Heizelement erzeugte Wärme nicht mehr so gut an das Fluid in der Fluidkammer abgegeben werden kann.

In weiterer Ausgestaltung der Erfindung kann vorgesehen sein, dass die Heizeinrichtung eine Pumpe aufweist, mit der Fluid in die Fluidkammer gepumpt werden kann. Diese Pumpe ist von der Steuerung ansteuerbar, gerade in einem vorgenannten Fall, wenn erkannt wird, dass ein unerwarteter Temperaturanstieg vorliegt, weil nicht mehr genügend Fluid zur Beheizung da ist und deswegen die Temperatur zu stark ansteigt. Alternativ zu einer solchen Pumpe kann ein höher gelegener Wassertank vorgesehen sein mit einer Zuleitung zu der Fluidkammer mit einem Ventil darin, das von der Steuerung entsprechend angesteuert werden kann, um weiteres Wasser in die Fluidkammer einzulassen.

Eine Möglichkeit des erfindungsgemäßen Verfahrens ist es also, Fluid in die Fluidkammer einzufüllen bzw. in ausreichender Menge in der Fluidkammer zu halten. Dies kann stationär erfolgen oder auch im Durchfluss. Dann wird mindestens eines der Heizelemente eingeschaltet zum Aufheizen der Fluidkammer und des Fluids darin. Vorteilhaft können alle Heizelemente der Heizeinrichtung eingeschaltet werden. Der Leckstrom als temperaturabhängiger Stromfluss durch die dielektrische Isolationsschicht wird erfasst. Dies kann grundsätzlich beliebig erfolgen, vorteilhaft eben über einem Widerstand als Leckspannung, da diese leichter an einen AD-Anschluss des eingangs genannten Controllers gegeben werden kann. Schließlich wird die Versorgungsspannung der Heizeinrichtung gemessen und diese gemessene Versorgungsspannung bei der Auswertung der Temperatur, die von dem Leckstrom abhängt, berücksichtigt. So kann ein Einfluss von Schwankungen dieser Versorgungsspannung reduziert werden oder sogar möglichst ganz beseitigt werden.

Vorteilhaft kann aus der gemessenen Versorgungsspannung und dem erfassten Leckstrom ein normiertes Leck-Signal in der Steuerung bzw. in einem Controller der Steuerung berechnet werden. Damit kann beispielsweise ein Nachfüllen von Fluid in die Fluidkammer beeinflusst werden. Ebenso kann eine Ansteuerung der Heizelemente berücksichtigt werden, insbesondere mit Leistungsreduzierung oder zumindest teilweiser Abschaltung.

Eine Temperatur kann überwacht werden durch Auswerten des Leckstroms hinsichtlich seiner absoluten Höhe und/oder seiner Steigung. Somit kann er sozusagen im kurzzeitigen wie auch im längerfristigen Verlauf ausgewertet werden. Auch dies ist an sich aus dem eingangs genannten Stand der Technik bekannt.

In vorteilhafter Ausgestaltung der Erfindung ist es möglich, dass der Leckstrom über einem Widerstand eben in eine Leckspannung umgewandelt wird. Diese Leckspannung kann direkt an einen AD-Eingang der Steuerung gegeben werden zur weiteren Verarbeitung. In der Steuerung bzw. in dem Controller mit dem AD-Eingang wird die umgewandelte Leckspannung durch die gemessene Versorgungsspannung dividiert, die ebenfalls auf vorgenannte Art und Weise an den Controller gegeben werden kann. Anschließend kann vorteilhaft der erhaltene Quotient mit einem Kompensationswert multipliziert werden, um ein normiertes Leck-Signal zu erhalten, was aber nicht zwingender Bestandteil der Erfindung sein muss. Dieses ist dann eben auf einen Grundwert der Versorgungsspannung normiert. Der Kompensationswert kann beispielsweise 230 betragen bei einer grundsätzlichen Versorgungsspannung von 230 V. Der vorgenannte Quotient bzw. das normierte Leck-Signal werden dann genutzt, um bei Übersteigen eines bestimmten absoluten Werts des Leck-Signals oder bei Übersteigen einer bestimmten Steigung des Verlaufs des Leck-Signals mehr Fluid bzw. Wasser in die Fluidkammer nachzufüllen und/oder um die Heizleistung der Heizelemente zu reduzieren und/oder um einen Verkalkungsgrad in der Fluidkammer zu erkennen. So kann der Rechenvorgang leicht durchgeführt werden mit verringertem Aufwand.

In einer Möglichkeit der Erfindung kann in dem Fall, dass das normierte Leck-Signal einen ersten Grenzwert übersteigt als Zeichen einer zu hohen Temperatur, eben mehr Fluid in die Fluidkammer nachgefüllt werden. Dieses Nachfüllen kann dann gestoppt werden, wenn das normierte Leck-Signal den ersten Grenzwert wieder unterschritten hat. Dann ist die Temperatur durch das nachgefüllte Fluid wieder unter den Grenzwert entsprechend einer bestimmten kritischen Temperatur gesunken.

In ähnlicher Form kann in dem Fall, dass die Steigung des Verlaufs des normierten Leck-Signals einen zweiten Grenzwert übersteigt, dies als Zeichen eines zu starken Temperaturanstiegs gewertet werden. Dann kann ebenfalls mehr Fluid in die Fluidkammer nachgefüllt werden. Auch hier wird das Nachfüllen gestoppt, wenn die Steigung des Verlaufs des normierten Leck-Signals den zweiten Grenzwert wieder unterschritten hat. So kann bei einem Verdampfer als Heizeinrichtung entsprechend der EP 3145273 A1 ein Nachfüllen von Wasser gut gesteuert werden.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränken die unter diesen gemachten Aussagen nicht in ihrer Allgemeingültigkeit.

### Kurzbeschreibung der Zeichnungen

Ausführungsbeispiele der Erfindung sind in den Zeichnungen schematisch dargestellt und werden im Folgenden näher erläutert. In den Zeichnungen zeigen:
- Fig. 1: eine erste Ausführung einer erfindungsgemäßen Heizeinrichtung mit einem einzigen Heizelement mit Schichtaufbau in Explosionsdarstellung,
- Fig. 2: eine zweite Ausführung einer erfindungsgemäßen Heizeinrichtung mit zwei Heizelementen in seitlicher Darstellung,
- Fig. 3: eine Draufsicht auf die Heizeinrichtung aus Fig. 2,
- Fig. 4: eine dritte Ausführung einer erfindungsgemäßen Heizeinrichtung als aufrecht stehende Rohr mit zwei Heizelementen,
- Fig. 5: eine vereinfachte Darstellung des Aufbaus der Messeinrichtung mit Spannungsteilern aus Widerständen,
- Fig. 6: ein Diagramm mit Verläufen der Netzspannung, der Leckspannung und des Betriebs der Pumpe aus Fig. 4 ohne die Erfindung und
- Fig. 7: das Diagramm mit Verläufen der Netzspannung, der Leckspannung und des Betriebs der Pumpe entsprechend Fig. 6 mit der Erfindung.

### Detaillierte Beschreibung der Ausführungsbeispiele

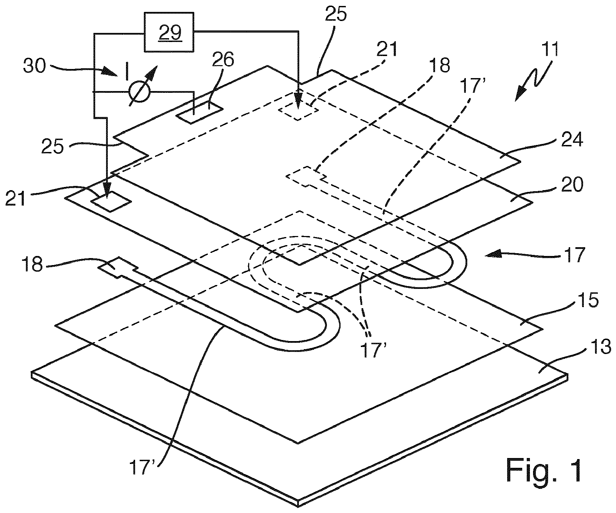

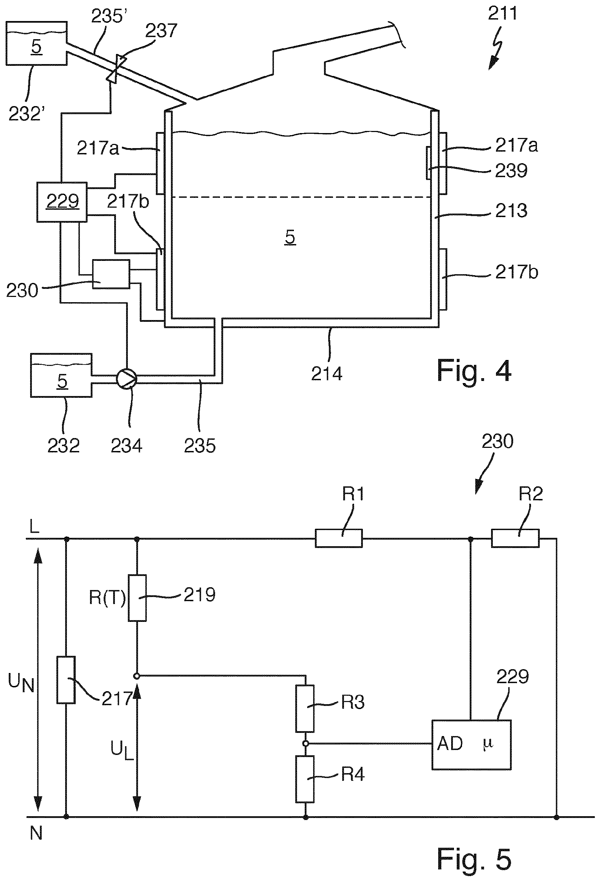

In Fig. 1 ist eine erste Ausführung einer erfindungsgemäßen Heizeinrichtung 11 in Explosionsdarstellung mit Schrägansicht dargestellt, die deren Schichtaufbau zeigt. Sie entspricht derjenigen aus der vorgenannten DE 102013200277 A1. Die Heizeinrichtung 11 weist einen Träger 13 auf, der hier aus Metall bzw. Edelstahl besteht. Er kann flach bzw. plan sein wie hier dargestellt, alternativ auch rohrförmig sein, wie es aus der vorgenannten DE 102010043727 A1 bekannt ist, siehe auch Fig. 4. An seiner Unterseite bzw. Fluidseite befindet sich zu erhitzendes Wasser bzw. fließt zu erhitzendes Wasser als Fluid vorbei. Auf dem Träger 13 ist eine Isolationsschicht 15 vorgesehen als Basis-Isolation des Trägers 13, die aus Glas oder Glaskeramik bestehen kann. Sie muss elektrisch isolieren, auch bei hohen Temperaturen. Ein solches Material ist dem Fachmann grundsätzlich für Isolationsschichten bekannt.

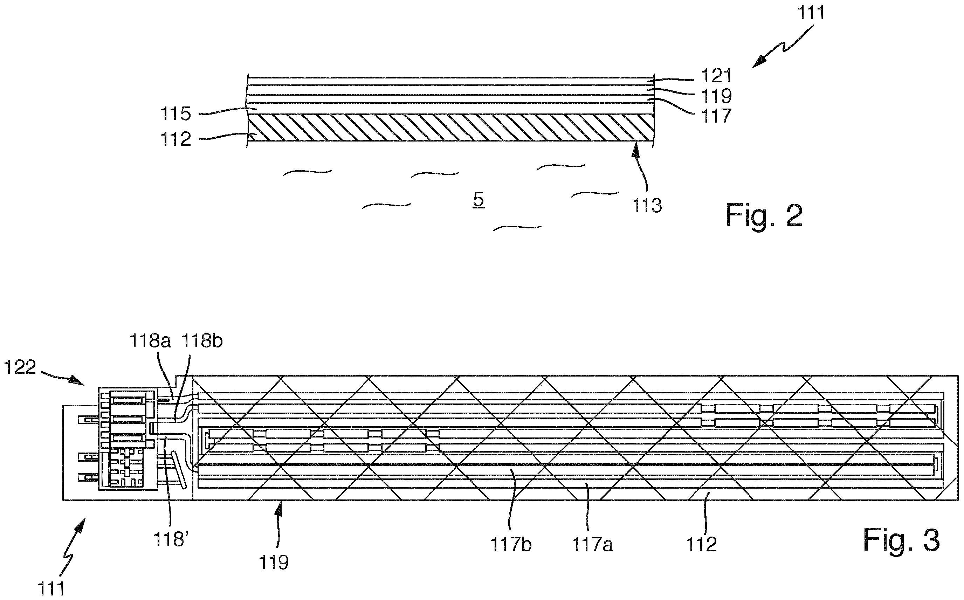

Auf der ersten Isolationsschicht 15 ist ein einziges Heizelement 17 mit mäanderförmigem Verlauf aufgebracht, das aus einzelnen hintereinander bzw. seriell geschalteten Heizleitern 17' besteht. Diese sind weitgehend gerade und durch gebogene Abschnitte verbunden. Es könnte aber auch ein einziger Heizleiter vorgesehen sein, der auch erheblich breiter ist als die hier dargestellten schmalen Heizleiter 17', siehe hierzu auch die Fig. 2. Das Heizelement 17 ist als Dickschichtheizelement aus üblichem Material ausgebildet und mit üblichen Verfahren aufgebracht. An seinen beiden Enden befinden sich vergrößerte Felder als Heizleiterkontakte 18, die möglicherweise auch aus anderem Material bestehen, beispielsweise einem für Dickschicht-Heizleiter üblichen Kontaktmaterial mit erheblich besserer elektrischer Leitfähigkeit und vor allem besseren Kontaktierungseigenschaften.

Über dem Heizelement 17 ist großflächig eine dielektrische Isolationsschicht 20 aufgebracht, die glasartig bzw. eine Glasschicht sein kann. Die dielektrische Isolationsschicht 20 verschließt sozusagen die Heizeinrichtung 11 bzw. isoliert das Heizelement 17 und verschließt dieses sowie den Schichtaufbau, insbesondere gegen schädliche oder aggressive Umwelteinflüsse. Zur elektrischen Kontaktierung an das Heizelement 17 bzw. dessen Heizleiterkontakte 18 weist die dielektrische Isolationsschicht 20 Fenster 21 genau über den Heizleiterkontakten 18 auf für ein an sich bekanntes Durchkontaktieren.

Auf der dielektrischen Isolationsschicht 20 ist eine Elektrode 24 als elektrisch leitfähiger Anschluss aufgebracht, und zwar in Form einer großflächigen Schicht. Diese ist hier genau so groß wie der Träger 13 und die Isolationsschicht 15. Die Elektrode 24 sollte nicht direkt auf den Träger 13 oder das Heizelement 17 überlappen, da sie von Träger 13 und Heizelement 17 isoliert sein muss. Auf der Elektrode 24 kann sich eine weitere Abdeckung bzw. Isolationsschicht befinden, muss aber nicht. Sie weist an den Ecken zwei Ausschnitte 25 auf, die zusammen mit den darunterliegenden Fenstern 21 in der dielektrischen Isolationsschicht 20 eine zuvor beschriebene Kontaktierung an die Heizleiterkontakte 18 ermöglichen. Das Heizelement 17 bzw. dessen Heizleiter 17' bilden die andere bzw. erste Anschlussfläche.

Dargestellt ist auch eine Steuerung 29 mit Leistungsversorgung für das Heizelement 17. Des Weiteren ist eine Messeinrichtung 30 dargestellt, die einerseits mit der Elektrode 24 über einen Elektrodenkontakt 26 und andererseits mit dem Heizelement 17 verbunden ist. Wie zuvor erläutert worden ist, ändern sich die dielektrischen bzw. resistiven Eigenschaften der dielektrischen Isolationsschicht 20 mit der Temperatur, und der von der Messeinrichtung 30 erfasste Leckstrom bzw. Ableitstrom ändert sich entsprechend bzw. steigt an mit ansteigender Temperatur. Die Messeinrichtung erfasst dann diese Änderung der Eigenschaften der dielektrischen Isolationsschicht 20 zwischen Heizelement 17 und Elektrode 24.

In Fig. 2 ist eine zweite Ausführung einer erfindungsgemäßen Heizeinrichtung 111 mit Schichtaufbau in sehr vereinfachter seitlicher Darstellung zu sehen. Ein Träger 112, der ggf. einen Behälter als Fluidkammer wie beispielsweise ein Rohr bilden kann, weist unten eine Fluidseite 113 auf als Unterseite, an der Wasser 5 als Fluid entlang strömt oder vorhanden ist. Dieses Wasser 5 soll mit der Heizeinrichtung 111 aufgeheizt werden. Auf der Oberseite des Trägers 112 ist eine Basisisolierung 115 als Isolierschicht vorgesehen. Darauf ist wiederum ein Heizelement 117 aufgebracht, hier als flächiges Heizelement bzw. in Dickschichttechnik. Auf das Heizelement 117 ist eine dielektrische Isolationsschicht 119 aufgebracht, und zwar in unterschiedlicher flächiger Ausgestaltung, wie zuvor erläutert worden ist und wie anhand der Fig. 3 gezeigt wird. Auf die dielektrische Isolationsschicht 119 wiederum ist eine Elektrodenfläche 121 als oberer Anschluss an die dielektrische Isolationsschicht 119 aufgebracht aus elektrisch leitfähigem Material. Deren flächige Ausgestaltung kann auch variabel sein. Das Heizelement 117 dient hier auch als unterer Anschluss an die dielektrische Isolationsschicht 119, wie zuvor erläutert worden ist.

An der Mediumseite 113 besteht die Gefahr einer Verkalkung der Heizeinrichtung 111 mit den genannten Risiken einer Überhöhung der Temperatur und Beschädigung oder sogar Zerstörung einzelner Heizelemente 117 oder der Heizeinrichtung 111. Deswegen ist gerade bei den hier genannten hohen Leistungsdichten darauf zu achten, dass dies nicht passiert.

An die Heizeinrichtung 111 sind entsprechend der Fig. 1 oder der DE 102013200277 A1 eine Steuerung und eine Messeinrichtung angeschlossen, was hier nicht dargestellt ist, aber später erklärt wird.

In der Fig. 3 ist in der Draufsicht die Heizeinrichtung 111 dargestellt, die entweder flach sein kann oder ein kurzes Rohr, so dass die Fig. 3 in diesem Fall den abgewickelten Träger zeigt, siehe auch Fig. 4. Auf den Träger 112 sind zwei Heizelemente aufgebracht, nämlich ein erstes Heizelement 117a und ein zweites Heizelement 117b. Das Heizelement 117a bildet einen Teil-Heizkreis und das Heizelement 117b bildet einen Teil-Heizkreis. Beide Heizelemente 117a und 117b sind ineinander verschränkt bzw. verlaufen mäanderförmig ineinander, so dass sie letztlich dieselbe Fläche des Trägers 112 beheizen, wenn sie einzeln betrieben werden, im gemeinsamen Betrieb ohnehin. Damit ist sozusagen eine unterschiedliche Aufteilung der Heizleistung der Heizeinrichtung 111 in sich möglich.

Beide Heizelemente 117a und 117b weisen die gleiche Länge und jeweils vier Längsabschnitte auf. Beide Heizelemente 117a und 117b weisen auch an zwei nebeneinanderliegenden Längsabschnitten auf bekannte Art und Weise Unterbrechungen durch Kontaktbrücken auf. Damit kann lokal die Heizleistung etwas gesenkt werden. Eine elektrische Kontaktierung der Heizelemente 117a und 117b erfolgt über die einzelnen Kontaktfelder 118a und 118b sowie ein gemeinsames Kontaktfeld 118'. Schematisch zu erkennen ist auch ein Steckanschluss 122, der auf den Kontaktfeldern 118 bzw. auf den Träger 112 aufgebracht ist, vorteilhaft gemäß der EP 1152639 A2.

Auf die Heizelemente 117a und 117b ist eine einzige flächige dielektrische Isolationsschicht 119 aus einem geeigneten Material aufgebracht, hier dargestellt durch die Kreuzschraffierung. Sie überdeckt beide Heizelemente 117a und 117b vollständig und reicht bis an den Rand des Trägers 112 oder kurz davor.

Auf die dielektrische Isolationsschicht 119 wiederum ist eine Elektrodenfläche 121 als elektrisch leitfähiger Anschluss aufgebracht, und zwar hier als vollflächige Elektrode. Somit ist zwar keine separate Temperaturerfassung bzw. Erfassung einer Verkalkung möglich mit Unterscheidung in verschiedene Flächen, aber ein einfacher Aufbau gewährleistet. Die flächenmäßige Unterscheidung erfolgt ja durch den vorbeschriebenen getrennten einzelnen Betrieb der Heizelemente 117a und 117b. Die Elektrodenfläche 121 ist auf hier nicht dargestellte Art und Weise elektrisch kontaktiert, vorteilhaft mittels des Steckanschlusses 122.

In der Fig. 4 ist eine dritte Ausführung einer erfindungsgemäßen Heizeinrichtung 211 dargestellt, die als Verdampfer ausgebildet ist. Für zu verdampfendes Wasser 5 weist sie ein kurzes aufrechtstehendes Rohr 213 entsprechend der Fluidkammer auf, das kreisrunden Querschnitt aufweist. Sein Durchmesser ist größer als seine Höhe, dies kann aber auch deutlich variieren. An der Außenseite des Rohrs 213 bzw. dessen Mantelseite ist oben ein erstes Heizelement 217a ganz umlaufend oder weitgehend umlaufend angeordnet. Darunter ist ein zweites entsprechend gleich ausgebildetes Heizelement 217b angeordnet. Die Heizelemente 217a und 217b können mehrere Heizleiter ähnlich Fig. 3 mit horizontalem parallelem Verlauf aufweisen. Die Heizelemente 217a und 217b sind mit Schichtaufbau entsprechend Fig. 2 versehen bzw. auf das Rohr 213 außen aufgebracht. Die dielektrische Isolationsschicht sowie elektrisch leitfähige Anschlüsse sind nicht dargestellt. Die Heizelement 217a und 217b sind an eine Steuerung 229 angeschlossen. Die nicht dargestellten dielektrischen Isolationsschichten sind mit einer Messeinrichtung 230 verbunden, die wiederum mit der Steuerung 229 verbunden ist. Die Steuerung 229 kann einen Controller aufweisen bzw. besteht im Wesentlichen aus diesem, zumindest was die intelligenten Steuerungsfunktionen betrifft. Vor allem steuert die Steuerung 229 auch den Betrieb der Heizelemente 217a und 217b, möglicherweise auch unabhängig voneinander. Hierzu wird hinsichtlich des Aufbaus auf die EP 3278691 A1 verwiesen. Wasser 5 im Rohr 213 wird mittels der Heizelemente 217a und 217b erhitzt und verdampft, so dass der Wasserdampf oben aus der Heizeinrichtung 211 austreten kann. Dabei ist, wie dort beschrieben worden ist, die Temperaturüberwachung von großer Bedeutung, wofür die Erfindung eben auch hier eine Rolle spielt aufgrund der erreichten erhöhten Genauigkeit.

An der Innenseite des Rohrs 213 ist rechts oben eine relativ kleine Verkalkung 239 vereinfacht dargestellt. Sie bewirkt, dass in diesem Bereich das Heizelement 217a seine Wärme nicht ausreichend gut an das Wasser 5 im Rohr 213 abgeben kann, somit kann es hier zu einer eingangs genannten Überhitzung bzw. zu einem sogenannten Hotspot kommen. Dies kann mit der Erfassung der Temperatur gemäß der Erfindung besonders gut erkannt werden.

In der Heizeinrichtung 211 gemäß Fig. 4 sind zwei Möglichkeiten implementiert, um Wasser 5 nachzufüllen. Links unten ist ein Wassertank 232 vorgesehen mit einer von der Steuerung 239 angesteuerten Pumpe 234, um Wasser 5 aus dem Wassertank 232 in die Heizeinrichtung 211 bzw. in die Fluidkammer des Rohrs 213 nachzufüllen. Dies wird vor allem dann gemacht, wenn festgestellt worden ist, dass der Wasserpegel im Rohr 213 deutlich abgesunken ist. Dargestellt ist dies durch die gestrichelte Linie unterhalb des oberen Heizelements 217a. Spätestens dann wird dieses obere Heizelement 217a stark überhitzen, und Wasser muss nachgefüllt werden für eine optimale Funktion des Verdampfens sowie vor allem um Schäden durch die Überhitzung zu verhindern. Dieses Nachfüllen von Wasser macht dann die Steuerung 229 mittels der Pumpe 234, wenn sie die ansteigende Temperatur erkannt hat.

Alternativ ist links oben an der Heizeinrichtung 211 ein weitere Wassertank 232' dargestellt mit Wasser 5 darin. Er ist oberhalb des Rohrs 213 angeordnet, so dass durch eine Zuleitung 235' Wasser selbsttätig in das Rohr 213 bzw. die Fluidkammer einströmen kann. Hierzu kann die Steuerung 229 entsprechend ein Ventil 237 in der Zuleitung 235' öffnen.

In Fig. 5 ist die Messeinrichtung 230 im Detail dargestellt, die wiederum mit der Steuerung 229 oder dem entsprechenden Controller verbunden ist. Die Spannung U_{N} ist Netzspannung und liegt an einem einzigen Heizelement 217 an, das hier dargestellt ist. Wären es mehrere Heizelemente, so würden sie voraussichtlich parallel zueinander an der Netzspannung U_{N} anliegen. Des Weiteren ist die dielektrische Isolationsschicht durch den temperaturabhängigen Widerstand R(T) 219 dargestellt. Gegenüber Masse N liegt hier die Leckspannung U_{L} an, da hier ein entsprechender Leckstrom über die dielektrische Isolationsschicht abfließt. Zur Erfassung dieser Leckspannung sind in der Messeinrichtung 230 die beiden Widerstände R3 und R4 als Spannungsteiler vorgesehen. Der Mittelabgriff geht direkt an einen AD-Eingang AD des Controllers. Dies ist eingangs ja erläutert worden.

Ein weiterer Spannungsteiler aus dem Widerständen R1 und R2 ist vorgesehen, um die Netzspannung U_{N} an der Phase L abzugreifen und ebenfalls an einen Eingang des Controllers der Steuerung 229 zu geben. Selbstverständlich ist hier leicht vorstellbar, dass die Spannungsteiler bzw. ein dadurch gebildetes Spannungsteiler-Netzwerk oder Widerstands-Netzwerk auch anders ausgebildet sein können.

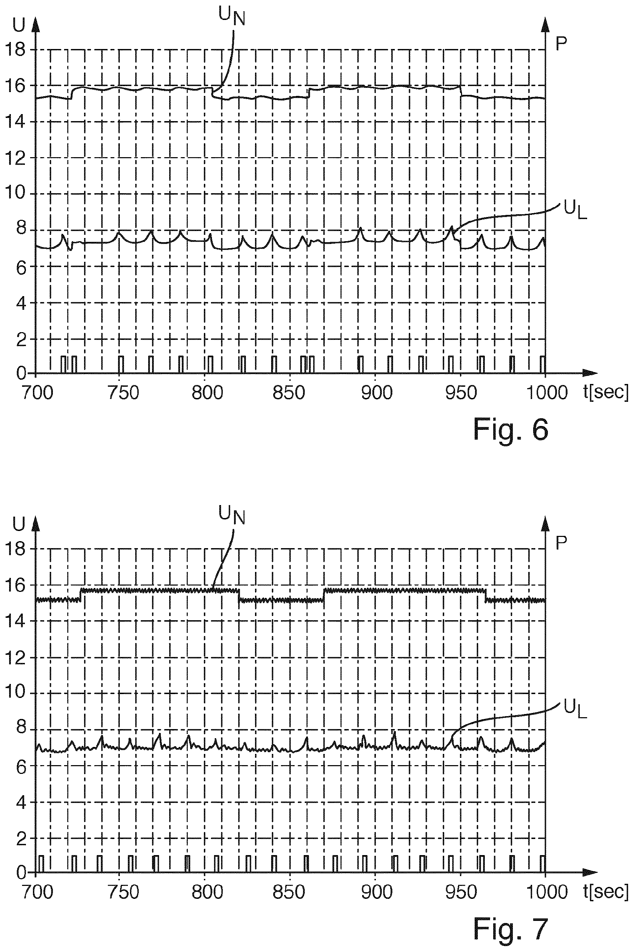

In der Steuerung 229 wird dann anhand der eingelesenen Spannungssignale die zuvor beschriebene Berechnung durchgeführt. Insbesondere wird die Leckspannung U_{L} durch die gemessene Netzspannung U_{N} dividiert, und dieser Quotient wird dann vorteilhaft mit einem Kompensationswert multipliziert. Dieser ist hierzu 230 gewählt, da die Heizeinrichtung 211 mit einer Netzspannung U_{N} von 230 V betrieben werden soll. So erhält man ein normiertes Leck-Signal. Dieses kann dann ausgewertet werden hinsichtlich seines absoluten Werts oder hinsichtlich seiner Steigung, also der ersten Ableitung des Verlaufs. Dies wird nachfolgend mit den Fig. 6 und 7 erläutert. Je nachdem welcher der bekannten Übertemperatur-Fälle daraus erkannt wird, kann ein Nachfüllen von Wasser 5 in die Fluidkammer erfolgen oder eine Reduzierung oder Abschaltung der Heizleistung eines der Heizelemente 217 oder aller Heizelemente erfolgen.

In der Fig. 6 ist über der Zeit t dargestellt, wie die Netzspannung U_{N} sowie die davon abhängige Leckspannung U_{L} verlaufen. Die Erfindung ist hier noch nicht umgesetzt. Ganz unten ist dargestellt entsprechend der rechten vertikalen Achse, wie der Aktivitätszustand der Pumpe 234 entsprechend Fig. 4 ist, also ob Wasser nachgepumpt werden muss.

Eigentlich ist der Betrieb des Verdampfers mit Heizeinrichtung 211 so, dass etwas alle 28 sec kurzzeitig gepumpt wird, um Wasser nachzufüllen. Dies zeigt sich in dem Intervall zwischen 750 sec und 850 sec sowie ab 890 sec. Da jedoch in der Netzspannung U_{N} Sprünge auftreten, insbesondere wenn bei Anordnung der Heizeinrichtung in einem Verdampfer innerhalb eines Backofens eine weitere starke Heizeinrichtung des Backofens als Verbraucher eingeschaltet oder ausgeschaltet wird, wobei die Sprünge durchaus nicht vernachlässigbar sind, entsteht ein Fehler. Diese Sprünge nach oben treten hier auf bei etwa 720 sec und etwa 860 sec. Bei etwa 805 sec und 950 sec treten die Sprünge nach unten auf. Dies hängt eben vom Einschalten und Ausschalten des weiteren Verbrauchers ab. Es zeigt sich, dass je nach den Sprüngen der Netzspannung U_{N} nach oben die Pumpe 234 anspringt, und zwar eben zum Zeitpunkt von etwas über 720 sec und etwas über 860 sec. Hier wird also zu früh gepumpt. Dies weist vor allem den Nachteil auf, dass dann mehr Fluid in der Heizeinrichtung ist als eigentlich notwendig oder vorgesehen, so dass mehr Wasser erhitzt werden muss und das Verdampfen etwas verschlechtert werden kann. Es ist auch zu erkennen, dass gerade an diesen Sprüngen das relativ regelmäßige Muster der Leckspannung U_{L} unterbrochen ist. Dies führt ja gerade zum ungewünschten Pumpen, ohne dass es eigentlich notwendig wäre.

In der Fig. 7 ist nun die erfindungsgemäße Kompensation bzw. Berechnung durchgeführt worden. Die Netzspannung U_{N} schwankt wieder, allerdings zu etwas anderen Zeiten. Es zeigt sich, dass aber nun durch die Erfassung und Berücksichtigung dieses Schwanken der Netzspannung U_{N} an der Heizeinrichtung, welches ja die Leckspannung U_{L} beeinflusst, so herauskompensiert werden kann, dass das Pumpen an der Pumpe 234 in den gewünschten regelmäßigen Abständen erfolgt. Vor allem zeigt sich dies eben auch in der Regelmäßigkeit des Verlaufs der Leckspannung U_{L}. Wenn die Sprünge in der Netzspannung U_{N} auftreten, ändert sich die Leckspannung U_{L} nicht. Damit ist eine bessere Temperaturerfassung möglich, und damit kann auch die Heizeinrichtung 211 besser betrieben werden.

Dieser Effekt ist leicht vorstellbar genauso vorteilhaft bei der Erkennung beispielsweise eines Hotspots bzw. einer lokalen Überhitzung durch eine Verkalkung 239 entsprechend Fig. 4. Durch diese Überhitzung steigt die Leckspannung U_{L}, da in diesem Bereich ein erhöhter Leckstrom fließt. Ein plötzlicher Anstieg in der Netzspannung U_{N}, mit der das Heizelement betrieben wird und somit auch zwangsläufig ein entsprechender Sprung in der Leckspannung auftritt, kann ausgeglichen werden.

Ähnliches gilt für eine großflächige Verkalkung, die ein insgesamt langsames Ansteigen der Leckspannung aufgrund langsam ansteigender Temperatur bewirkt.

## Patentansprüche

1. Heizeinrichtung (11, 111, 211) für Fluide (5), wobei die Heizeinrichtung (11, 111, 211) eine Fluidkammer (13, 112, 213) aufweist, wobei:
- an einer Außenseite der Fluidkammer mindestens ein Heizelement (17, 117, 217) mit mindestens einem Heizleiter (17') aufgebracht ist,
- die Heizeinrichtung (11, 111, 211) mindestens eine flächige dielektrische Isolationsschicht (20, 119, 219) aufweist, die im Wesentlichen das mindestens eine Heizelement überdeckt,
- die dielektrische Isolationsschicht (20, 119, 219)einen temperaturabhängigen elektrischen Widerstand aufweist,
- auf beiden Seiten der dielektrischen Isolationsschicht (20, 119, 219), insbesondere mit derselben Überdeckung, jeweils mindestens ein elektrisch leitfähiger Anschluss (18, 24, 117, 121) vorgesehen ist,
- mindestens einer der elektrisch leitfähigen Anschlüsse (18, 24, 117, 121) an eine Steuerung (29, 229) oder Messeinrichtung (30) angeschlossen ist zur Erfassung eines Leckstroms (I) als temperaturabhängiger Stromdurchfluss durch die dielektrische Isolationsschicht (20, 119, 219) hindurch,
- Messmittel (230) vorgesehen sind zur Messung der Versorgungsspannung (U_{N}) der Heizeinrichtung,
**dadurch gekennzeichnet, dass**
- die Steuerung der Heizeinrichtung (11, 111, 211) einen Controller (29, 229) oder Mikrocontroller aufweist, der einen AD-Eingang aufweist,
- die Messmittel (230) mit dem AD-Eingang verbunden sind,
- die Steuerung so eingerichtet ist, dass sie bei einer Auswertung der Temperatur abhängig vom Leckstrom (I) die gemessene Versorgungspannung (U_{N}) berücksichtigt wird.

2. Heizeinrichtung nach Anspruch 1, **dadurch gekennzeichnet, dass** die Messmittel (230) einen Spannungsteiler mit mindestens zwei Widerständen (R1, R1) aufweisen, der mit der Versorgungsspannung (U_{N}) verbunden ist, um die Versorgungsspannung zu verringern zum Verbinden mit dem AD-Eingang.

3. Heizeinrichtung nach Anspruch 1 oder 2, **dadurch gekennzeichnet, dass** die Fluidkammer (13, 112, 213) ein Rohr aufweist, das aufrecht steht mit einer Höhe größer als der Durchmesser des Rohrs, oder liegt, wobei das mindestens eine Heizelement (17,117, 217) auf einer Mantel-Außenseite des Rohrs aufgebracht ist.

4. Heizeinrichtung nach Anspruch 1 oder 2, **dadurch gekennzeichnet, dass** die Fluidkammer einen flachen Boden aufweist, wobei das mindestens eine Heizelement auf einer Unterseite des Bodens aufgebracht ist.

5. Heizeinrichtung nach einem der vorhergehenden Ansprüche, **dadurch gekennzeichnet, dass** an der Außenseite der Fluidkammer (13, 112, 213) mindestens zwei Heizelemente (117a, 117b, 217a, 217b) mit jeweils mehreren Heizleitern aufgebracht sind, wobei die beiden Heizelemente (117a, 117b, 217a, 217b) separat ansteuerbar sind und in getrennten Höhenabschnitten der Fluidkammer (13, 112, 213) des Rohrs angeordnet sind.

6. Heizeinrichtung nach einem der vorhergehenden Ansprüche, **dadurch gekennzeichnet, dass** sie eine Pumpe (234) aufweist, um Wasser (5) in die Fluidkammer (213) zu pumpen, wobei die Pumpe von der Steuerung (229) der Heizeinrichtung (211) ansteuerbar ist.

7. Heizeinrichtung nach einem der Ansprüche 1 bis 5, **dadurch gekennzeichnet, dass** sie einen höher gelegenen Fluidtank (232') aufweist mit einer Zuleitung (235') zu der Fluidkammer (213) mit einem Ventil (237) darin, das von der Steuerung (229) entsprechend ansteuerbar ist, um weiteres Fluid (5) in die Fluidkammer (213) einzulassen.

8. Heizeinrichtung nach einem der vorhergehenden Ansprüche, **dadurch gekennzeichnet, dass** an der Fluidkammer (213) als Wasserkammer nach oben ein Dampfaustritt vorgesehen ist.

9. Heizeinrichtung nach einem der vorhergehenden Ansprüche, **dadurch gekennzeichnet, dass** der elektrisch leitfähige Anschluss (24, 117, 121) eine elektrisch leitfähige Anschlussfläche ist.

10. Verfahren zum Betrieb einer Heizeinrichtung (11, 111, 211) nach einem der vorhergehenden Ansprüche, mit folgenden Schritten:
- Einfüllen von Fluid (5) in die Fluidkammer (13, 112, 213),
- Einschalten eines der Heizelemente (17, 117, 217),
- Erfassen des Leckstroms (I_{L}) als temperaturabhängiger Stromfluss durch die dielektrische Isolationsschicht (20, 119, 219),
- Messen der Versorgungsspannung (U_{N}) der Heizeinrichtung (11, 111, 211,
- Berücksichtigen der gemessenen Versorgungspannung (U_{N}) bei einer Auswertung der Temperatur an der Fluidkammer (13, 113, 213) abhängig vom Leckstrom (I_{L}).

11. Verfahren nach Anspruch 10, **dadurch gekennzeichnet, dass** aus der gemessenen Versorgungsspannung (U_{N}) und dem erfassten Leckstrom (I_{L}) ein Leck-Signal in der Steuerung (29, 229) berechnet wird, mit dem ein Nachfüllen von Fluid (5) in die Fluidkammer (13, 113, 213) und/oder eine Ansteuerung der Heizelemente (17, 117, 217) beeinflusst wird.

12. Verfahren nach Anspruch 10 oder 11, **gekennzeichnet durch** ein Überwachen einer Temperatur an der dielektrischen Isolationsschicht (20, 119, 219) durch Auswerten des Leckstroms (I_{L}) hinsichtlich absoluter Höhe und/oder Steigung.

13. Verfahren nach einem der Ansprüche 10 bis 12, **gekennzeichnet durch** die Schritte:
- Umwandeln des Leckstroms (I_{L}) in eine Leckspannung (U_{L}) über einem Widerstand (R3, R4),
- die umgewandelte Leckspannung (U_{L}) wird durch die gemessene Versorgungsspannung (U_{N}) dividiert,
- anschließend wird der erhaltene Quotient mit einem Kompensationswert multipliziert um ein normiertes Leck-Signal zu erhalten, das auf einen Grundwert der Versorgungsspannung (U_{N}) normiert ist,
- das normierte Leck-Signal wird genutzt, um bei Übersteigen eines bestimmten absoluten Wertes des Leck-Signals oder bei Übersteigen einer bestimmten Steigung des Verlaufs des Leck-Signals mehr Fluid (5) in die Fluidkammer (13, 113, 213) nachzufüllen und/oder die Heizleistung mindestens eines Heizelements (17, 117, 217) zu reduzieren und/oder einen Verkalkungsgrad an einer Wandung der Fluidkammer (13, 113, 213) zu erkennen.

14. Verfahren nach Anspruch 13, **dadurch gekennzeichnet, dass** in dem Fall, dass das normierte Leck-Signal einen ersten Grenzwert übersteigt als Zeichen einer zu hohen Temperatur mehr Fluid (5) in die Fluidkammer (13, 113, 213) nachgefüllt wird, und das Nachfüllen gestoppt wird, wenn das normierte Leck-Signal den ersten Grenzwert wieder unterschritten hat.

15. Verfahren nach Anspruch 13 oder 14, **dadurch gekennzeichnet, dass** in dem Fall, dass die Steigung des Verlauf des normierten Leck-Signals einen zweiten Grenzwert übersteigt als Zeichen eines zu starken Temperaturanstiegs mehr Fluid (5) in die Fluidkammer (13, 113, 213) nachgefüllt wird, und das Nachfüllen gestoppt wird, wenn die Steigung des Verlauf des normierten Leck-Signals den zweiten Grenzwert wieder unterschritten hat.

## Claims

1. Heating device (11, 111, 211) for fluids (5), the heating device (11, 111, 211) comprising a fluid chamber (13, 112, 213), wherein:
- at least one heating element (17, 117, 217) having at least one heating conductor (17') is applied on an outer side of the fluid chamber,
- the heating device (11, 111, 211) comprises at least one extensive dielectric insulation layer (20, 119, 219) which essentially covers the at least one heating element,
- the dielectric insulation layer (20, 119, 219) has a temperature-dependent electrical resistance,
- at least one electrically conductive connection (18, 24, 117, 121) is respectively provided on both sides of the dielectric insulation layer (20, 119, 219), in particular with the same coverage,
- at least one of the electrically conductive connections (18, 24, 117, 121) is connected to a control unit (29, 229) or a measuring device (30) in order to detect a leakage current (I) as a temperature-dependent current flow through the dielectric insulation layer (20, 119, 219),
- measuring means (230) are provided in order to measure the supply voltage (U_{N}) of the heating device,
**characterized in that**
- the control unit of the heating device (11, 111, 211) comprises a controller (29, 229) or microcontroller which comprises an AD input,
- the measuring means (230) are connected to the AD input,
- the control unit is configured such that the measured supply voltage (U_{N}) is taken into account in an evaluation of the temperature as a function of the leakage current (I).

2. Heating device according to claim 1, **characterized in that** the measuring means (230) comprise a voltage divider having at least two resistors (R1, R1), which is connected to the supply voltage (U_{N}) in order to reduce the supply voltage for connection to the AD input.

3. Heating device according to claim 1 or 2, **characterized in that** the fluid chamber (13, 112, 213) comprises a tube, which is standing tall with a height greater than the diameter of the tube, or is lying, wherein the at least one heating element (17, 117, 217) is applied on a circumferential outer side of the tube.

4. Heating device according to claim 1 or 2, **characterized in that** the fluid chamber comprises a flat bottom, the at least one heating element being applied on a lower side of the bottom.

5. Heating device according to any of the preceding claims, **characterized in that** at least two heating elements (117a, 117b, 217a, 217b), each having a plurality of heating conductors, are applied on the outer side of the fluid chamber (13, 112, 213), the two heating elements (117a, 117b, 217a, 217b) being separately drivable and arranged in separate height sections of the fluid chamber (13, 112, 213) of the tube.

6. Heating device according to any of the preceding claims, **characterized in that** it comprises a pump (234) in order to pump water (5) into the fluid chamber (213), the pump being drivable by the control unit (229) of the heating device (211).

7. Heating device according to any of claims 1 to 5, **characterized in that** it comprises a more highly positioned fluid tank (232') having a delivery line (235') to the fluid chamber (213) with a valve (237) therein, which is correspondingly drivable by the control unit (229) in order to introduce more fluid (5) into the fluid chamber (213).

8. Heating device according to any of the preceding claims, **characterized in that** a steam outlet is provided above on the fluid chamber (213) as a water chamber.

9. Heating device according to any of the preceding claims, **characterized in that** the electrically conductive connection (24, 117, 121) is an electrically conductive connection surface.

10. Method for operating a heating device (11, 111, 211) according to any of the preceding claims, having the following steps:
- introducing fluid (5) into the fluid chamber (13, 112, 213),
- switching on one of the heating elements (17, 117, 217),
- detecting the leakage current (I_{L}) as a temperature-dependent current flow through the dielectric insulation layer (20, 119, 219),
- measuring the supply voltage (U_{N}) of the heating device (11, 111, 211),
- taking the measured supply voltage (U_{N}) into account in an evaluation of the temperature at the fluid chamber (13, 112, 213) as a function of the leakage current (I_{L}).

11. Method according to claim 10, **characterized in that** a leakage signal, with which topping up of the fluid chamber (13, 113, 213) with fluid (5) and/or driving of the heating elements (17, 117, 217) is influenced, is calculated in the control unit (29, 229) on the basis of the measured supply voltage (U_{N}) and the detected leakage current (I_{L}).

12. Method according to claim 10 or 11, **characterized by** monitoring of a temperature at the dielectric insulation layer (20, 119, 219) by evaluating the leakage current (I_{L}) in respect of absolute level and/or slope.

13. Method according to any of claims 10 to 12, **characterized by** the steps:
- converting the leakage current (I_{L}) into a leakage voltage (U_{L}) by means of a resistor (R3, R4),
- the converted leakage voltage (U_{L}) is divided by the measured supply voltage (U_{N}),
- the quotient obtained is subsequently multiplied by a compensation value in order to obtain a normalized leakage signal, which is normalized to a base value of the supply voltage (U_{N}),
- the normalized leakage signal is used, if a particular absolute value of the leakage signal is exceeded or if a particular slope of the profile of the leakage signal is exceeded, in order to top up the fluid chamber (13, 113, 213) with more fluid (5) and/or to reduce the heating power of at least one heating element (17, 117, 217) and/or to identify a degree of calcification on a wall of the fluid chamber (13, 113, 213).

14. Method according to claim 13, **characterized in that**, in the event that the normalized leakage signal exceeds a first limit value as an indication of an excessively high temperature, the fluid chamber (13, 113, 213) is topped up with more fluid (5) and the topping up is stopped when the normalized leakage current has returned below the first limit value.

15. Method according to claim 13 or 14, **characterized in that**, in the event that the slope of the profile of the normalized leakage signal exceeds a second limit value as an indication of an excessive temperature rise, the fluid chamber (13, 113, 213) is topped up with more fluid (5) and the topping up is stopped when the slope of the profile of the normalized leakage signal has returned below the second limit value.

## Revendications

1. Dispositif de chauffage (11, 111, 211) pour fluides (5), dans lequel le dispositif de chauffage (11, 111, 211) présente une chambre de fluide (13, 112, 213), dans lequel :
- sur un côté extérieur de la chambre de fluide au moins un élément de chauffage (17, 117, 217) avec au moins un conducteur de chauffage (17') est appliqué,
- le dispositif de chauffage (11, 111, 211) présente au moins une couche d'isolation diélectrique (20, 119, 219) sur la surface, ladite couche recouvrant essentiellement l'au moins un élément de chauffage,
- la couche d'isolation diélectrique (20, 119, 219) présente une résistance électrique dépendant de la température,
- sur deux côtés de la couche d'isolation diélectrique (20, 119, 219), en particulier par le même recouvrement, à chaque fois au moins un raccordement électriquement conducteur (18, 24, 117, 121) est prévu,
- au moins l'un des raccordements électriquement conducteur (18, 24, 117, 121) est raccordé à un système de commande (29, 229) ou un dispositif de mesurage (30) pour détecter un courant de fuite (I) en tant que passage de courant dépendant de la température à travers la couche d'isolation diélectrique (20, 119, 219),
- moyens de mesurage (230) sont prévus pour mesurer la tension d'alimentation (U_{N}) du dispositif de chauffage,
**caractérisé en ce que**
- le système de commande du dispositif de chauffage (11, 111, 211) présente un contrôleur (29, 229) ou microcontrôleur, qui présente une entrée AD,
- les moyens de mesurage (230) sont raccordés à l'entrée AD,
- le système de commande est configuré de telle manière que lors d'une évaluation de la température dépendant du courant de fuite (I) la tension d'alimentation (U_{N}) mesurée est prend en compte.

2. Dispositif de chauffage selon la revendication 1, **caractérisé en ce que** les moyens de mesurage (230) présentent un diviseur de tension avec au moins deux résistances (R1, R1) qui est raccordé à la tension d'alimentation (U_{N}) afin de réduire la tension d'alimentation pour le raccordement à l'entrée AD.

3. Dispositif de chauffage selon la revendication 1 ou 2, **caractérisé en ce que** la chambre de fluide (13, 112, 213) présente un tube, qui est debout avec une hauteur supérieure au diamètre du tube, ou est allongé, dans lequel l'au moins un élément de chauffage (17, 117, 217) est appliqué sur le côté extérieur enveloppant du tube.

4. Dispositif de chauffage selon la revendication 1 ou 2, **caractérisé en ce que** la chambre de fluide présente un fond plat, dans lequel l'au moins un élément de chauffage est appliqué sur un côté inférieur du fond.

5. Dispositif de chauffage selon l'une quelconque des revendications précédentes, **caractérisé en ce que** sur le côté extérieur de la chambre de fluide (13, 112, 213) au moins deux éléments de chauffage (117a, 117b, 217a, 217b) chacun avec plusieurs conducteurs de chauffage sont appliqués, les deux éléments de chauffage (117a, 117b, 217a, 217b) pouvant être commandés séparément et se situant dans sections de hauteur distinctes de la chambre de fluide (13, 112, 213) du tube.

6. Dispositif de chauffage selon l'une quelconque des revendications précédentes, **caractérisé en ce que** le dispositif présente une pompe (234) afin de pomper de l'eau (5) dans la chambre de fluide (213), la pompe pouvant être commandée par le système de commande (229) du dispositif de chauffage (211).

7. Dispositif de chauffage selon l'une quelconque des revendications 1 à 5, **caractérisé en ce que** le dispositif présente un réservoir de fluide (232') plus élevé avec une conduite d'alimentation (235') à la chambre de fluide (213) avec une soupape (237) là-dedans, qui peut être commandée par le système de commande (229) conformément, afin d'admettre fluide (5) supplémentaire dans la chambre de fluide (213).

8. Dispositif de chauffage selon l'une quelconque des revendications précédentes, **caractérisé en ce qu'**une sortie vapeur vers le haut est prévue sur la chambre de fluide (213) en tant que chambre d'eau.

9. Dispositif de chauffage selon l'une quelconque des revendications précédentes, **caractérisé en ce que** le raccordement électriquement conducteur (24, 117, 121) est sous forme de plage de raccordement électriquement conducteur.

10. Procédé de fonctionnement d'un dispositif de chauffage (11, 111, 211) selon l'une quelconque des revendications précédentes, comprenant les étapes suivantes :
- remplir du fluide (5) dans la chambre de fluide (13, 112, 213),
- mettre en marche l'un des éléments de chauffage (17, 117, 217),
- détecter le courant de fuite (I_{L}) en tant que passage de courant dépendant de la température à travers la couche d'isolation diélectrique (20, 119, 219),
- mesurer la tension d'alimentation (U_{N}) du dispositif de chauffage (11, 111, 211),
- prendre en compte la tension d'alimentation (U_{N}) mesurée dans une évaluation de la température à la chambre de fluide (13, 112, 213) dépendant du courant de fuite (I_{L}).

11. Procédé selon la revendication 10, **caractérisé en ce que**, à partir de la tension d'alimentation (U_{N}) mesurée et le courant de fuite (I_{L}) détecté, un signal de fuite est calculé dans le système de commande (29, 229) pour ainsi influencer un remplissage de fluide (5) dans la chambre de fluide (13, 112, 213) et/ou un commandement des éléments de chauffage (17, 117, 217).

12. Procédé selon la revendication 10 ou 11, **caractérisé par** une surveillance d'une température sur la couche d'isolation diélectrique (20, 119, 219) par évaluation du courant de fuite (I_{L}) en termes de hauteur absolue et/ou pente.

13. Procédé selon l'une quelconque des revendications 10 à 12, **caractérisé par** les étapes suivantes :
- transformer le courant de fuite (I_{L}) dans une tension de fuite (U_{L}) sur une résistance (R3, R4),
- diviser la tension de fuite (U_{L}) transformée par la tension d'alimentation (U_{N}) mesurée,
- ensuite multiplier le quotient obtenu par une valeur de compensation afin d'obtenir un signal de fuite normé qui est normé à une valeur de base de la tension d'alimentation (U_{N}),
- utiliser le signal de fuite normé afin de, en cas d'un dépassement d'une certaine valeur absolue du signal de fuite ou en cas d'un dépassement d'une certaine pente du trajet du signal de fuite, remplir plus de fluide (5) dans la chambre de fluide (13, 112, 213) et/ou réduire la puissance de chauffage d'au moins un élément de chauffage (17, 117, 217) et/ou détecter un niveau de calcification sur une paroi de la chambre de fluide (13, 112, 213).

14. Procédé selon la revendication 13, **caractérisé en ce que**, dans le cas que le signal de fuite normé dépasse une première valeur limite signifiant une température excessive, plus de fluide (5) est rempli dans la chambre de fluide (13, 112, 213), et le remplissement est arrêté dès que le signal de fuite normé encore sous-dépasse la première valeur limite.

15. Procédé selon la revendication 13 ou 14, **caractérisé en ce que**, dans le cas que la pente du trajet du signal de fuite normé dépasse une deuxième valeur limite signifiant une augmentation de température excessive, plus de fluide (5) est rempli dans la chambre de fluide (13, 112, 213), et le remplissement est arrêté dès que la pente du trajet du signal de fuite normé encore sous-dépasse la deuxième valeur limite.
